(19) Europäisches Patentamt / European Patent Office / Office européen des brevets

(11) **EP 3 157 665 B1**

(12) **EUROPÄISCHE PATENTSCHRIFT**

(45) Veröffentlichungstag und Bekanntmachung des Hinweises auf die Patenterteilung:
**15.08.2018 Patentblatt 2018/33**

(21) Anmeldenummer: **15730202.7**

(22) Anmeldetag: **23.06.2015**

(51) Int Cl.:
**B01J 19/26** *(2006.01)*

(86) Internationale Anmeldenummer:
**PCT/EP2015/064026**

(87) Internationale Veröffentlichungsnummer:
**WO 2015/197571 (30.12.2015 Gazette 2015/52)**

(54) **VORRICHTUNG ZUM EINBRINGEN VON TROPFEN AUS EINER MONOMERLÖSUNG IN EINEN REAKTOR**

APPARATUS FOR INTRODUCTION OF DROPLETS OF A MONOMER SOLUTION INTO A REACTOR

DISPOSITIF POUR L'INTRODUCTION DE GOUTTES D'UNE SOLUTION MONOMÉRIQUE DANS UN RÉACTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2014 EP 14173483**

(43) Veröffentlichungstag der Anmeldung:
**26.04.2017 Patentblatt 2017/17**

(73) Patentinhaber: **BASF SE**
**67056 Ludwigshafen am Rhein (DE)**

(72) Erfinder:
• **DAISS, Andreas**
**67061 Ludwigshafen (DE)**
• **BAYER, Robert**
**74889 Sinsheim (DE)**
• **SCHLIWA, Rudolf**
**63755 Alzenau (DE)**
• **FREIBERG, Jürgen**
**68623 Lampertheim (DE)**
• **POSSEMIERS, Karl J.**
**67346 Speyer (BE)**
• **KRÜGER, Marco**
**68219 Mannheim (DE)**

(74) Vertreter: **BASF IP Association**
**BASF SE**
**G-FLP-C006**
**67056 Ludwigshafen (DE)**

(56) Entgegenhaltungen:
**DE-A1-102005 044 035    US-A1- 2011 059 329**

**Beschreibung**

Die Erfindung geht aus von einer Vorrichtung zum Einbringen von Tropfen aus einer Monomerlösung zur Herstellung von Poly(meth)acrylat in einen Reaktor zur Tropfenpolymerisation, wobei mindestens ein Kanal oder ein Vertropferkopf umfasst ist, wobei der Kanal oder der Vertropferkopf an seiner Unterseite mit einer Vertropferplatte verschlossen ist, wobei die Vertropferplatte Löcher aufweist, durch die die Monomerlösung in den Reaktor eingebracht wird.

Poly(meth)acrylate finden Anwendung insbesondere als wasserabsorbierende Polymere, die beispielsweise bei der Herstellung von Windeln, Tampons, Damenbinden und anderen Hygieneartikeln oder auch als wasserzurückhaltende Mittel im landwirtschaftlichen Gartenbau verwendet werden.

Die Eigenschaften der wasserabsorbierenden Polymere können über den Vernetzungsgrad eingestellt werden. Mit steigendem Vernetzungsgrad steigt die Gelfestigkeit und sinkt die Absorptionskapazität. Dies bedeutet, dass mit steigender Absorption unter Druck die Zentrifugenretentionskapazität abnimmt, wobei bei sehr hohen Vernetzungsgraden auch die Absorption unter Druck wieder abnimmt.

Zur Verbesserung der Anwendungseigenschaften, beispielsweise der Flüssigkeitsleitfähigkeit in der Windel und der Absorption unter Druck, werden wasserabsorbierende Polymerpartikel im Allgemeinen nachvernetzt. Dadurch steigt nur der Vernetzungsgrad an der Partikeloberfläche, wodurch die Absorption unter Druck und die Zentrifugenretentionskapazität zumindest teilweise entkoppelt werden können. Diese Nachvernetzung kann in wässriger Gelphase durchgeführt werden. Im Allgemeinen werden aber gemahlene und abgesiebte Polymerpartikel an der Oberfläche mit einem Nachvernetzer beschichtet, thermisch nachvernetzt und getrocknet. Dazu geeignete Vernetzer sind Verbindungen, die mindestens zwei Gruppen enthalten, die mit den Carboxylatgruppen des hydrophilen Polymeren kovalente Bindungen bilden können.

Zur Herstellung der wasserabsorbierenden Polymerpartikel sind unterschiedliche Verfahren bekannt. So können zum Beispiel die zur Herstellung von Poly(meth)acrylaten eingesetzten Monomere und gegebenenfalls Additive einem Mischkneter zugegeben werden, in dem die Monomere zum Polymer reagieren. Durch rotierende Wellen mit Knetbarren im Mischkneter wird das entstehende Polymer in Brocken zerrissen. Das dem Kneter entnommene Polymer wird getrocknet und gemahlen und einer Nachbearbeitung zugeführt. In einer alternativen Variante wird das Monomer in Form einer Monomerlösung, die auch weitere Additive enthalten kann, in einen Reaktor zur Tropfenpolymerisation eingebracht. Beim Einbringen der Monomerlösung in den Reaktor zerfällt diese in Tropfen. Bei dem Mechanismus der Tropfenbildung kann es sich um turbulenten oder laminaren Strahlzerfall oder aber auch um Vertropfung handeln. Der Mechanismus der Tropfenbildung hängt dabei von den Eintrittsbedingungen und den Stoffeigenschaften der Monomerlösung ab. Die Tropfen fallen im Reaktor nach unten, wobei das Monomer zum Polymer reagiert. Im unteren Bereich des Reaktors befindet sich eine Wirbelschicht, in die die durch die Reaktion aus den Tropfen entstehenden Polymerpartikel fallen. In der Wirbelschicht findet dann eine Nachreaktion statt. Entsprechende Verfahren sind zum Beispiel in der WO-A 2006/079631, der WO-A 2008/086976, der WO-A 2007/031441, der WO-A 2008/040715, der WO-A 2010/003855 und der WO-A 2011/026876 beschrieben.

Nachteil bei allen Verfahren, die nach dem Prinzip der Sprühtrocknung durchgeführt werden, bei denen Monomerlösung in Tropfen zerfällt und in einem Reaktor unter Bildung des Polymeren nach unten fällt, ist, dass Tropfen beim Zusammenprall koaleszieren können und auch an die Wandung des Reaktors prallende Tropfen anhaften können und so zu einer ungewünschten Belagbildung führen können.

Aufgabe der vorliegenden Erfindung ist es daher, eine Vorrichtung zum Einbringen von Tropfen aus einer Monomerlösung zur Herstellung von Poly(meth)acrylat in einen Reaktor zur Tropfenpolymerisation bereitzustellen, bei der eine Koaleszenz der einzelnen Tropfen weitgehend vermieden wird und zudem die Tropfen über den Reaktorquerschnitt möglichst gleichmäßig verteilt werden.

Die Aufgabe wird durch die in den Ansprüchen definierte Vorrichtung gelöst. Sie ermöglicht das Einbringen von Tropfen aus einer Monomerlösung zur Herstellung von Poly(meth)acrylat in einen Reaktor zur Tropfenpolymerisation, wobei mindestens ein Kanal oder ein Vertropferkopf umfasst ist, wobei der Kanal oder der Vertropferkopf an seiner Unterseite mit einer Vertropferplatte verschlossen ist, wobei die Vertropferplatte Löcher aufweist, durch die die Monomerlösung in den Reaktor eingebracht wird, und wobei die Vertropferplatte so gestaltet ist, dass Löcher die bei einer achssymmetrischen Vertropferplatte oder einer ringförmigen oder als Ringsegment gestalteten Vertropferplatte nicht auf einer Mittellinie der Vertropferplatte oder bei einer kreisförmigen Vertropferplatte nicht am Mittelpunkt der Vertropferplatte liegen, so ausgerichtet sind, dass Monomerlösung durch die Löcher in einem Winkel zur Senkrechten in den Reaktor eingebracht wird und wobei bei einer radialen Ausrichtung von achssymmetrischen Vertropferplatten die Löcher so ausgerichtet sind, dass der Winkel, mit dem die Monomerlösung in den Reaktor eingebracht wird, in Richtung der Achse des Reaktors abnimmt, und bei parallel zueinander angeordneten Vertropferplatten oder konzentrisch angeordneten Vertropferplatten jeweils auf einer Linie parallel zur Mittellinie oder konzentrisch um den Mittelpunkt verlaufenden Linie so ausgerichtet sind, dass der Winkel, mit dem die Monomerlösung in den Reaktor eingebracht wird, konstant ist.

Durch die erfindungsgemäße Anordnung der Löcher in den Vertropferplatten wird ein ausreichend großer Abstand zwischen den einzelnen Tropfen im Reaktor erhalten, so dass diese nicht koaleszieren und zudem alle Tropfen von ausreichend Gas umschlossen sind, um die Reaktion der Monomerlösung zum Poly(meth)acrylat zu ermöglichen. Zudem kann der gesamte Querschnitt des Reaktors ausgenutzt werden. Ein weiterer Vorteil der erfindungsgemäßen Vorrichtung zum Einbringen von Tropfen ist dass die Querschnittsfläche, die von der Vorrichtung überdeckt wird, möglichst klein ist, so dass ausreichend Gas um die Vorrichtung strömen kann. Zudem können die einzelnen Teile der Vorrichtung mit geringstmöglicher Breite gestaltet werden, um den Einfluss der Vorrichtung zum Einbringen der Monomerlösung auf die Strömung des Gases zu minimieren.

In einer ersten Ausführungsform der Erfindung wird die Monomerlösung mit einem Vertropferkopf in den Reaktor eingebracht, wobei der Vertropferkopf an seiner Unterseite mit einer rotationssymmetrisch ausgebildeten Vertropferplatte, durch die die Monomerlösung eingebracht wird, verschlossen ist. Die den Vertropferkopf abschließende Vertropferplatte weist vorzugsweise ringförmig um den Mittelpunkt der Vertropferplatte angeordnete Löcher zur Zugabe der Monomerlösung auf. Die Ausrichtung der Löcher derart, dass die durch die äußeren Löcher zugegebene Monomerlösung in einem Winkel aus den Löchern austritt, führt dazu, dass die Tropfen eine Geschwindigkeitskomponente aufweisen, die radial vom Mittelpunkt weg weist. Dies erlaubt es, den Querschnitt des Vertropferkopfes wesentlich kleiner zu gestalten als den Durchmesser des Reaktors. Weiterhin ist es auch möglich, mehrere Vertropferköpfe vorzusehen, die jeweils eine vergleichbare Gestaltung aufweisen.

In einer zweiten Ausführungsform weist die Vorrichtung zum Einbringen der Monomerlösung mindestens einen ringförmigen Kanal auf. In diesem Fall ist der Kanal an seiner Unterseite mit einer ringförmigen Vertropferplatte oder alternativ mit mehreren Vertropferplatten, die jeweils in Form eines Ringabschnitts gestaltet sind. In diesem Fall sind die Löcher in den Vertropferplatten so angeordnet, dass die in der Mitte liegenden Löcher, vorzugsweise, auf der ringförmig verlaufenden Mittellinie der Vertropferplatte so ausgerichtet sind, dass die Monomerlösung parallel zur Achse des Reaktors nach unten aus den Löchern austritt. Zum Rand der Vertropferplatte sind die Löcher so ausgerichtet, dass die Flüssigkeit in einem Winkel zur Achse des Reaktors austritt. Diese Anordnung der Löcher erlaubt die Verteilung der Tropfen über den gesamten Querschnitt des Reaktors. Bei einem großen Reaktordurchmesser ist es möglich, mehrere ringförmige Kanäle vorzusehen, die konzentrisch um einen gemeinsamen Mittelpunkt angeordnet sind. Der Winkel, mit dem die Flüssigkeit austritt, und der Abstand der ringförmigen Kanäle werden dabei vorzugsweise so gewählt, dass sich die aus nebeneinander angeordneten Kanälen austretenden Tropfen nicht berühren und die Flugbahnen sich nicht überschneiden.

In einer dritten Ausführungsform enthält die Vorrichtung zum Einbringen der Monomerlösung mehrere Kanäle, die parallel zueinander verlaufen. In diesem Fall sind die Vertropferplatten vorzugsweise rechteckig ausgebildet und die Löcher entlang der Mittellinie, die sich parallel zu den langen Seiten des Rechtecks erstreckt, sind vorzugsweise so ausgerichtet, dass die Monomerlösung parallel zur Achse des Reaktors senkrecht nach unten tropft und die Löcher, die nicht auf der Mittellinie liegen so ausgerichtet sind, dass die Flüssigkeit mit einem Winkel zur Achse des Reaktors austritt. Hierbei ist es möglich, den Winkel gleich groß zu halten oder die Löcher so auszuführen, dass der Winkel zu den Rändern der Vertropferplatte hin zunimmt.

In einer vierten, bevorzugten Ausführungsform umfasst die Vorrichtung zum Einbringen der Monomerlösung mehrere Kanäle, die jeweils radial ausgerichtet sind. Hierdurch ergibt sich eine sternförmige Anordnung der Kanäle, wobei die Kanäle unterschiedlich lang sein können. Bevorzugt ist es bei einer radialen Anordnung der Kanäle, bei der die Kanäle unterschiedlich lang sind, wenn die Kanäle unterschiedlich weit von außen in Richtung zur Mitte des Reaktors hineinragen. Dabei ist die Anordnung vorzugsweise derart, dass zwischen zwei bis zur Mitte hineinragende Kanäle ein oder mehrere kürzere Kanäle positioniert sind, wobei die Länge der Kanäle von einem Kanal, der bis zur Mitte des Reaktors ragt, bis zur Mittellinie zwischen den zwei bis zur Mitte des Reaktors ragenden Kanälen abnimmt und von der Mittellinie zwischen den zwei bis zur Mitte des Reaktors ragenden Kanälen zum zweiten bis zur Mitte des Reaktors ragenden Kanal wieder zunimmt. Bei der radialen Anordnung der Kanäle sind Löcher, die sich entlang der Mittellinie der Vertropferplatten erstrecken, so ausgerichtet, dass die Monomerlösung durch diese Löcher senkrecht nach unten tropft und Monomerlösung aus Löchern, die nicht auf der Mittellinie liegen, in einem Winkel zur Achse des Reaktors austritt, wobei es auch hier möglich ist, den Winkel aller Löcher, die nicht auf der Mittellinie liegen, gleich groß zu halten oder die Löcher zu auszuführen, dass der Winkel zu den Rändern der Vertropferplatte hin zunimmt. Erfindungsgemäß nimmt bei einer radialen Anordnung der Kanäle der Winkel mit dem die Monomerlösung zugegeben wird, zur Achse des Reaktors hin ab. Hierdurch wird die Monomerlösung durch die weiter entfernt von der Achse liegenden Löcher mit einem größeren Winkel eingebracht, so dass die sich bildenden Tropfen weiter weg von dem Kanal fliegen, so dass eine gleichmäßige Tropfenverteilung über den Querschnitt des Reaktors erhalten wird.

Üblicherweise tritt die Monomerlösung in Form eines Flüssigkeitsstrahls aus den Löchern der Vorrichtung zur Vertropfung aus, der dann im Reaktor in Tropfen zerfällt. Der Zerfall des Flüssigkeitsstrahls hängt zum einen von der Menge der Flüssigkeit ab, die durch die Löcher pro Zeiteinheit austritt, zum anderen von der Geschwindigkeit und Menge des durch den Reaktor strömenden Gases. Weiterhin beeinflussen die Stoffeigenschaften der Monomerlösung und die Geometrie der Löcher die Art des Strahlzerfalles. Im Rahmen der vorliegenden Erfindung wird der Tropfenzerfall auch als Eintropfen oder Vertropfen bezeichnet.

Damit genug Gas an der Vorrichtung zur Vertropfung der Monomerlösung vorbeiströmen kann, so dass eine gleichmäßige Gasgeschwindigkeit im Reaktor erzielt werden kann und keine zu große Beschleunigung und Verwirbelung des Gases beim Umströmen der Vorrichtung erfolgt, ist es weiterhin bevorzugt, wenn das Verhältnis der von der Vorrichtung zur Vertropfung abgedeckten Fläche in dem Reaktor bezogen auf die Fläche, die von der die äußersten Löcher verbindenden Linie umschlossen wird, kleiner als 50% ist und bevorzugt im Bereich zwischen 3 und 30 % liegt.

Damit die aus den Kanälen austretenden Tropfen schnellstmöglich mit dem die Kanäle umströmenden Gas in Kontakt kommen, ist es weiterhin bevorzugt, wenn die Kanäle eine möglichst geringe Breite aufweisen. Die Breite der Kanäle liegt dabei vorzugsweise im Bereich von 25 bis 500 mm, weiter bevorzugt im Bereich von 100 bis 400 mm und insbesondere im Bereich von 150 bis 350 mm.

Weiterhin ist es bevorzugt, wenn die Anzahl der Löcher bezogen auf die Fläche, die durch die die äußersten Löcher verbindende Linie gebildet wird, im Bereich von 100 bis 1000 Löchern/m$^2$, bevorzugt im Bereich von 150 bis 800 Löcher/m$^2$ und insbesondere im Bereich von 200 bis 500 Löcher/m$^2$ liegt. Hierdurch wird sichergestellt, dass die an den Löchern gebildeten Tropfen einen ausreichend großen Abstand voneinander haben und zudem ausreichend mit dem durch den Reaktor strömenden Gas in Kontakt kommen können.

Wenn die Vorrichtung zum Einbringen der Monomerlösung Kanäle enthält, die parallel verlaufen, ist es bevorzugt, wenn mindestens zwei Verteileranordnungen mit jeweils mindestens zwei parallel zueinander angeordneten Vertropferplatten in einem Winkel zueinander angeordnet sind, so dass sich eine Mehrecksteilung ergibt. Als Verteileranordnung werden dabei die jeweils parallel zueinander ausgerichteten Kanäle verstanden. Wenn die Kanäle der Verteileranordnungen in einem Winkel von 90° zueinander angeordnet sind, ergibt sich eine Rechtecksteilung, bei einem Winkel von 60° eine Dreiecksteilung. Neben einem Winkel zwischen den Kanälen der einzelnen Verteileranordnungen von 90° oder 60° ist auch jeder andere Winkel, beispielsweise 45° möglich. Andere Winkel führen jedoch im Allgemeinen dazu, dass von den sich kreuzenden Kanälen unterschiedliche Polygone gebildet werden. Bevorzugt ist eine Anordnung der Kanäle derart, dass sich durch kreuzende Kanäle eine Dreiecksteilung oder Rechtecksteilung ergibt, wobei der Abstand zwischen den parallel verlaufenden Kanälen möglichst gleich ist, so dass sich bei der Dreiecksteilung von den sich kreuzenden Kanälen der Verteileranordnungen gleichseitige Dreiecke gebildet werden und bei der Rechtecksteilung Quadrate.

In der Ausführungsform mit radialer Anordnung der Vertropferplatten wird der abnehmende Winkel, mit dem die Monomerlösung in den Reaktor eingebracht wird, zum Beispiel erhalten, indem ein Kanal von mindestens zwei Vertropferplatten verschlossen ist und der Winkel, mit dem die Monomerlösung in den Reaktor eingetropft wird für jede Lochreihe in einer Vertropferplatte konstant ist, wobei die Winkel bei den näher zur Mitte des Reaktors angeordneten Vertropferplatten kleiner sind als die Winkel der Vertropferplatten, die weiter außen angeordnet sind.

Die Anzahl N$_{RL}$ der einzelnen Kanäle bei einer sternförmigen Anordnung ist abhängig vom Umfang U des Reaktors an der Position, an der die Kanäle angeordnet sind. Bevorzugt liegt die Anzahl der Kanäle im nachfolgend definierten Bereich:

$$\frac{U}{4.0m} \le N_{RL} \le \frac{U}{1.2m}$$

und insbesondere

$$\frac{U}{3.6m} \le N_{RL} \le \frac{U}{1.8m}.$$

Hierbei ist der Umfang U in Metern einzusetzen und "m" bedeutet Meter.

Wenn die Kanäle so angeordnet sind, dass sich eine Mehrecksteilung ergibt, ist es vorteilhaft, die jeweils parallel verlaufenden Kanäle unterschiedlicher Verteileranordnungen auf unterschiedlichen Ebenen in den Reaktor einzubringen, so dass sich diese zwar kreuzen, aber nicht auf gleicher Höhe schneiden.

Der Winkel, mit dem die Monomerlösung in den Reaktor eingebracht wird, liegt im Bereich von 0 bis 30°, bevorzugt im Bereich von 0,1 bis 20° und insbesondere im Bereich von 0,2 bis 15°. Der Winkel ist dabei davon abhängig, mit welcher Geschwindigkeit die Monomerlösung in den Reaktor eingebracht wird und wie groß der Abstand zwischen zwei Kanälen ist, damit sich die Flugbahnen der Tropfen die zwei benachbarte Kanäle verlassen, nicht schneiden.

Neben der Ausführungsform, bei der eine Vertropferplatte konstante Winkel aufweist und sich die Winkel der einzelnen Vertropferplatten eines Kanals unterscheiden, ist es auch möglich und bevorzugt, wenn bei radialer Anordnung der Vertropferplatten der Winkel, mit dem die Monomerlösung in den Reaktor eingebracht wird, in einer Vertropferplatte vom Mittelpunkt des Reaktors nach außen zunimmt. Durch diese Gestaltung der Vertropferplatten wird eine weitere Vergleichmäßigung der Tropfenverteilung über den Querschnitt des Reaktors erhalten.

In einer bevorzugten Ausführungsform bei radialer Anordnung der Kanäle liegt der Winkel a, mit dem die Monomerlösung zumindest aus den Löchern an den radialen Rändern austritt, im nachfolgend definierten Bereich:

$$\frac{r}{N_{LR} \cdot d_P \cdot v^{0.578}} \cdot (0.00697 \cdot r + 0.0332) - 6.296 \le \alpha \le \frac{r}{N_{LR} \cdot d_P \cdot v^{0.578}} \cdot (0.00697 \cdot r + 0.0332) + 4.704,$$

bevorzugt

$$\frac{r}{N_{LR} \cdot d_P \cdot v^{0.578}} \cdot (0.00697 \cdot r + 0.0332) - 4.296 \le \alpha \le \frac{r}{N_{LR} \cdot d_P \cdot v^{0.578}} \cdot (0.00697 \cdot r + 0.0332) + 2.704$$

und besonders bevorzugt

$$\frac{r}{N_{LR} \cdot d_P \cdot v^{0.578}} \cdot (0.00697 \cdot r + 0.0332) - 2.296 \le \alpha \le \frac{r}{N_{LR} \cdot d_P \cdot v^{0.578}} \cdot (0.00697 \cdot r + 0.0332) + 1.704,$$

für den Gültigkeitsbereich

$$0.25m \le r \le 10m$$

$$0.0001m \le d_P \le 0.0015m$$

$$3\tfrac{m}{s} \le v \le 30\tfrac{m}{s}$$

$$3 \le N_{LR} \le 18.$$

Hierbei bedeuten r die radiale Position des Lochs in Metern, $N_{LR}$ die Anzahl der Kanäle, $d_p$ der mittlere Tropfendurchmesser in Metern und v die Tropfenaustrittsgeschwindigkeit in Meter pro Sekunde. Der Winkel $\alpha$ der Löcher ergibt sich in Grad. Wenn sich ein Wert kleiner als Null ergibt, so ist anstelle des berechneten Wertes der Wert 0° für den Winkel zu verwenden.

Eine weitere Optimierung des Austrittswinkels der Tropfen bezogen auf die Achse des Reaktors kann durch numerische Simulationsrechnungen erfolgen. Neben einer stetigen Änderung des Austrittswinkels ist es alternativ auch möglich, den Austrittswinkel der Tropfen stufenweise zu ändern. Hierzu wird dann vorzugsweise jeweils der Winkel in der Mitte einer Stufe nach obiger Definition festgelegt. Eine stufenweise Änderung ergibt sich zum Beispiel auch durch die vorstehend beschriebene Variante mit mehreren Vertropferplatten, bei der die Winkel einer Vertropferplatte konstant sind, sich aber die Winkel von näher an der Achse des Reaktors liegenden Vertropferplatten von denen weiter entfernt von der Achse liegender Vertropferplatten unterscheiden.

Wenn bei einer achssymmetrisch gestalteten Vertropferplatte oder bei einer als Ring oder Ringabschnitt gestalteten Vertropferplatte Löcher entlang der parallel zur Achse des Kanals verlaufenden Mittellinie oder bei einer kreisförmigen Vertropferplatte am Mittelpunkt vorgesehen sind, so sind diese vorzugsweise so ausgerichtet sind, dass Monomerlösung, die durch diese Löcher eingebracht wird, senkrecht nach unten tropft.

Um die Löcher so auszurichten, dass die Monomerlösung unter einem Winkel zur Senkrechten in den Reaktor eingebracht wird, ist es möglich, die Löcher jeweils in dem gewünschten Winkel in die Vertropferplatte einzubringen. Bevorzugt ist es jedoch, die Löcher alle senkrecht zur Vertropferplatte einzubringen und die Vertropferplatten so zu formen, dass diese ein entlang ihrer Mittellinie gewinkeltes Profil, ein symmetrisch zur Mittellinie mehrfach gewinkeltes Profil oder ein Profil in Form eines Kreissegments aufweisen. Durch das gewinkelte oder in Form eines Kreissegments gestaltete Profil der Vertropferplatte verlaufen die in die Vertropferplatte eingebrachten Löcher in einem Winkel zur Senkrechten des Reaktors, so dass die Monomerlösung mit dem Winkel, den die Löcher aufweisen, in den Reaktor eingebracht wird.

Wenn das Profil entlang der Mittellinie gewinkelt ist, entstehen zwei geneigte Bereiche, die vorzugsweise symmetrisch zur Senkrechten im Reaktor ausgerichtet sind, so dass die Monomerlösung symmetrisch aus der Vertropferplatte unter Bildung von Tropfen ausströmt. Auch bei einem mehrfach gewinkelten Profil ist das entstehende Profil vorzugsweise symmetrisch zu einer durch die Mittellinie der Vertropferplatte verlaufende senkrechte Symmetrieebene. Ein mehrfach gewinkeltes Profil kann zum Beispiel einen waagerechten mittleren Bereich und zwei seitliche geneigte Bereiche aufweisen. Auch ist es möglich, mehrere geneigte Bereiche auf jeder Seite vorzusehen, wobei der Winkel der geneigten Bereiche zum Rand der Vertropferplatte hin zunimmt. Hierdurch ergeben sich zum Rand der Vertropferplatte Löcher mit einem größeren Winkel als näher zur Mittellinie liegende Löcher, so dass die die äußeren Löcher verlassende Monomerlösung weiter von dem Kanal wegfliegt. Auch dies sorgt für eine weitere Vergleichmäßigung der Tropfenverteilung über den Querschnitt des Reaktors soweit unterhalb der Vorrichtung zum Einbringen der Monomerlösung, dass die Tropfen senkrecht nach unten fallen.

Damit eine ausreichend große Anzahl an Tropfen erzeugt werden kann und zudem die Tropfen über den gesamten Reaktorquerschnitt verteilt werden, sind bei einer radialen, parallelen oder ringförmigen Anordnung der Vertropferplatten mehrere Kanäle umfasst, die jeweils eine oder mehrere Vertropferplatten aufweisen. Insbesondere bei großen Reaktordurchmessern und entsprechend langen Kanälen ist es aus fertigungstechnischen Gründen sinnvoll, jeden Kanal mit mehreren kleineren Vertropferplatten zu verschließen. Dies hat insbesondere auch den Vorteil, dass bei einer möglichen notwendigen Revision einzelne Vertropferplatten eines Kanals ausgetauscht werden können, was eine bessere Handhabung erlaubt. Insbesondere bei einer Anordnung der Kanäle in Mehreckteilung werden einzelne Vertropferplatten eingesetzt, die jeweils maximal der Länge zwischen zwei Kreuzungspunkten der Kanäle entsprechen, um zu vermeiden, dass Monomerlösung von höheren Kanälen auf tieferliegende Kanäle tropft. Bei einer radialen Anordnung mit unterschiedlich langen Kanälen ist es möglich in Abhängigkeit der Länge eine unterschiedliche Anzahl an Vertropferplatten vorzusehen und alle Vertropferplatten gleich zu gestalten.

Für eine einfache Revision, zum Beispiel zur Reinigung der Vertropferplatten, ist es vorteilhaft, diese lösbar, beispielsweise durch Verschrauben, mit dem Kanal oder dem Vertropferkopf zu verbinden. Weniger bevorzugt aber auch möglich ist eine formschlüssige Verbindung der Vertropferplatte mit dem Kanal oder dem Vertropferkopf, zum Beispiel durch Schweißen, Löten oder Kleben. Weiterhin ist es auch möglich, Kanal und Vertropferplatten oder Vertropferkopf und Vertropferplatte einteilig zu gestalten, wobei in diesem Fall der Boden des Kanals oder des Vertropferkopfs die Vertropferplatte bildet.

Der Abstand der äußersten Löcher einer Vertropferplatte zum Rand der Vertropferplatte ist vorzugsweise maximal 200 mm, bevorzugt maximal 100 mm und insbesondere maximal 50 mm. Hierdurch können die Kanäle ausreichend schmal gestaltet werden, um die Gasströmung nur wenig zu behindern, zudem sind die Vertropferplatten nicht so lang, dass eine einfache Handhabung nicht mehr möglich ist.

Um eine ausreichend große Anzahl an Tropfen zu erzeugen, ist es bevorzugt, wenn die Löcher der Vertropferplatten in mehreren Lochreihen angeordnet sind. Hierbei ist es insbesondere bevorzugt, wenn der Abstand der einzelnen Löcher in einer Lochreihe und der Abstand benachbarter Lochreihen im Wesentlichen gleich groß ist. Ein geeigneter Abstand der Löcher in einer Lochreihe und der Lochreihen zueinander liegt im Bereich von 1 bis 100 mm, bevorzugt im Bereich von 2 bis 50 mm und insbesondere im Bereich von 3 bis 20 mm. Auch wenn die Löcher nicht in Lochreihen angeordnet sind, liegt der Abstand der Löcher vorzugsweise in diesen Bereichen.

Um Tropfen einer geeigneten Größe für wasserabsorbierende Polymere zu erhalten, ist es weiterhin bevorzugt, wenn die Löcher in den Vertropferplatten einen Durchmesser im Bereich von 25 bis 500 $\mu m$ aufweisen.

Ausführungsbeispiele der Erfindung sind in den Figuren dargestellt und werden in der nachfolgenden Beschreibung näher erläutert.

Es zeigen:

Figur 1      einen Längsschnitt durch einen Reaktor zur Tropfenpolymerisation

Figur 2      eine Anordnung von radial verlaufenden Vertropferkanälen unterschiedlicher Länge,

Figur 3      eine Anordnung von sternförmig angeordneten Vertropferkanälen,

Figur 4      eine Anordnung von Vertropferkanälen in Rechteckteilung,

Figur 5      eine Anordnung von Vertropferkanälen in Dreieckteilung,

Figur 6      einen Querschnitt durch einen Vertropferkanal in einer ersten Ausführungsform,

Figur 7      einen Querschnitt durch einen Vertropferkanal in einer zweiten Ausführungsform,

Figur 8      einen Querschnitt durch einen Vertropferkanal in einer dritten Ausführungsform,

Figur 9      eine Draufsicht auf eine Vertropferplatte.

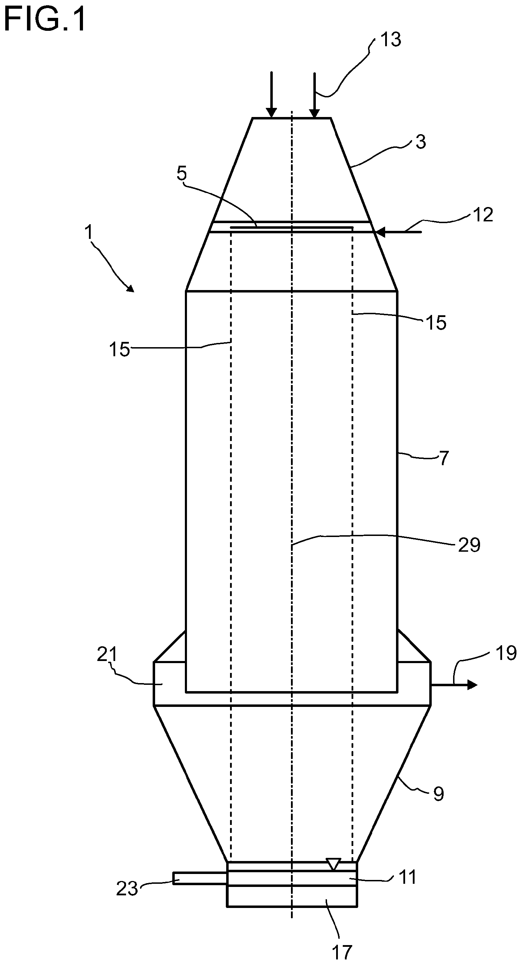

Figur 1 zeigt einen Längsschnitt durch einen Reaktor zur Tropfenpolymerisation, wie er zur Herstellung von Poly(meth)acrylatpartikeln vorzugsweise eingesetzt wird.

Ein Reaktor 1 zur Tropfenpolymerisation umfasst einen Reaktorkopf 3, in dem eine Vorrichtung zur Vertropfung 5 aufgenommen ist, einen mittleren Bereich 7, in dem die Polymerisationsreaktion erfolgt und einen unteren Bereich 9 mit einer Wirbelschicht 11, in der die Reaktion abgeschlossen wird.

Zur Durchführung der Polymerisationsreaktion zur Herstellung des Poly(meth)acrylats wird der Vorrichtung zur Vertropfung 5 eine Monomerlösung über eine Monomerzufuhr 12 zugeführt. Wenn die Vorrichtung zur Vertropfung 5 mehrere Kanäle aufweist, ist es bevorzugt, jedem Kanal über eine eigene Monomerzufuhr 12 die Monomerlösung zuzuführen. Die Monomerlösung tritt durch in Figur 1 nicht dargestellte Löcher in der Vorrichtung zur Vertropfung 5 aus und zerfällt in einzelne Tropfen, die im Reaktor nach unten fallen. Über eine erste Zugabestelle für ein Gas 13 oberhalb der Vorrichtung zur Vertropfung 5 wird ein Gas, beispielsweise Stickstoff oder Luft, in den Reaktor 1 eingeleitet. Die Gasströmung unterstützt dabei den Zerfall der aus den Löchern der Vorrichtung zur Vertropfung 5 austretenden Monomerlösung in einzelne Tropfen. Zusätzlich wird durch die Gasströmung unterstützt, dass sich die einzelnen Tropfen nicht berühren und zu größeren Tropfen koaleszieren.

Um zum Einen den zylindrischen mittleren Bereich 7 des Reaktors möglichst kurz zu gestalten und zudem zu vermeiden, dass Tropfen an die Wandung des Reaktors 1 prallen, ist der Reaktorkopf 3 vorzugsweise, wie hier dargestellt, konisch ausgebildet, wobei sich die Vorrichtung zur Vertropfung 5 im konischen Reaktorkopf 3 oberhalb des zylindrischen Bereichs befindet. Alternativ ist es allerdings auch möglich, den Reaktor auch im Reaktorkopf 3 zylindrisch mit einem Durchmesser wie im mittleren Bereich 7 zu gestalten. Bevorzugt ist jedoch eine konische Gestaltung des Reaktorkopfs 3. Die Position der Vorrichtung zur Vertropfung 5 wird so gewählt, dass zwischen den äußersten Löcher, durch die die Monomerlösung zugeführt wird und der Wandung des Reaktors noch ein ausreichend großer Abstand ist, um ein Anprallen der Tropfen an die Wandung zu verhindern. Hierzu sollte der Abstand mindestens im Bereich von 50 bis 1500 mm, bevorzugt im Bereich von 100 bis 1250 mm und insbesondere im Bereich von 200 bis 750 mm liegen. Selbstverständlich ist auch ein größerer Abstand zur Wandung des Reaktors möglich. Dies hat jedoch den Nachteil, dass mit einem größeren Abstand eine schlechtere Ausnutzung des Reaktorquerschnittes einhergeht.

Der untere Bereich 9 schließt mit einer Wirbelschicht 11 ab, in die die während des Falls aus den Monomertropfen entstandenen Polymerpartikel fallen. In der Wirbelschicht erfolgt die Nachreaktion zum gewünschten Produkt. Erfindungsgemäß sind die äußersten Löcher, durch die die Monomerlösung vertropft wird, so positioniert, dass ein senkrecht nach unten fallender Tropfen in die Wirbelschicht 11 fällt. Dies kann zum Beispiel dadurch realisiert werden, dass der hydraulische Durchmesser der Wirbelschicht mindestens so groß ist wie der hydraulische Durchmesser der Fläche, die von einer die äußersten Löcher in der Vorrichtung zur Vertropfung 5 verbindenden Linie umschlossen wird, wobei die Querschnittsfläche der Wirbelschicht und die von der die äußersten Löcher verbindenden Linie gebildete Fläche die gleiche Form haben und sich die Mittelpunkte der beiden Flächen in einer senkrechten Projektion aufeinander an derselben Position befinden. Die äußerste Position der äußeren Löcher bezogen auf die Position der Wirbelschicht 11 ist in Figur 1 mit Hilfe einer gestrichelten Linie 15 dargestellt.

Um weiterhin zu vermeiden, dass Tropfen auch im mittleren Bereich 7 an die Wandung des Reaktors prallen, ist der hydraulische Durchmesser auf Höhe der Mitte zwischen der Vorrichtung zur Vertropfung und der Gasentnahmestelle mindestens 10% größer als der hydraulische Durchmesser der Wirbelschicht.

Der Reaktor 1 kann dabei jede beliebige Querschnittsform aufweisen. Bevorzugt ist der Querschnitt des Reaktors 1 jedoch kreisförmig. In diesem Fall entspricht der hydraulische Durchmesser dem Durchmesser des Reaktors 1.

Oberhalb der Wirbelschicht 11 nimmt der Durchmesser des Reaktors 1 in der hier dargestellten Ausführungsform zu, so dass sich der Reaktor 1 im unteren Bereich 9 von unten nach oben konisch erweitert. Dies hat den Vorteil, dass im Reaktor 1 entstandene Polymerpartikel, die auf die Wandung treffen, an der Wandung nach unten in die Wirbelschicht 11 rutschen können. Zur Vermeidung von Anbackungen können zusätzlich hier nicht dargestellte Klopfer vorgesehen sein, mit denen die Wandung des Reaktors in Schwingungen versetzt wird, wodurch sich anhaftende Polymerpartikel lösen und in die Wirbelschicht 11 rutschen.

Zur Gaszufuhr für den Betrieb der Wirbelschicht 11, befindet sich unterhalb der Wirbelschicht 11 ein Gasverteiler 17, durch den das Gas in die Wirbelschicht 11 eingeblasen wird.

Da sowohl von oben als auch von unten Gas in den Reaktor 1 eingeleitet wird, ist es erforderlich, an einer geeigneten Position Gas aus dem Reaktor 1 zu entnehmen. Hierzu ist am Übergang vom mittleren Bereich 7 mit konstantem Querschnitt zum sich konisch von unten nach oben erweiternden unteren Bereich 9 mindestens eine Gasentnahmestelle 19 angeordnet. Hierbei ragt der zylindrische mittlere Bereich 7 mit seiner Wandung in den sich nach oben konisch erweiternden unteren Bereich 9 hinein, wobei der Durchmesser des konischen unteren Bereichs 9 an dieser Position größer ist als der Durchmesser des mittleren Bereichs 7. Hierdurch wird eine die Wandung des mittleren Bereichs 7 umlaufende ringförmige Kammer 21 gebildet, in die das Gas einströmt und durch die mindestens eine Gasentnahmestelle 19, die mit der ringförmigen Kammer 21 verbunden ist, abgezogen werden kann.

Die nachreagierten Polymerpartikel der Wirbelschicht 11 werden über eine Produktentnahmestelle 23 im Bereich der Wirbelschicht entnommen.

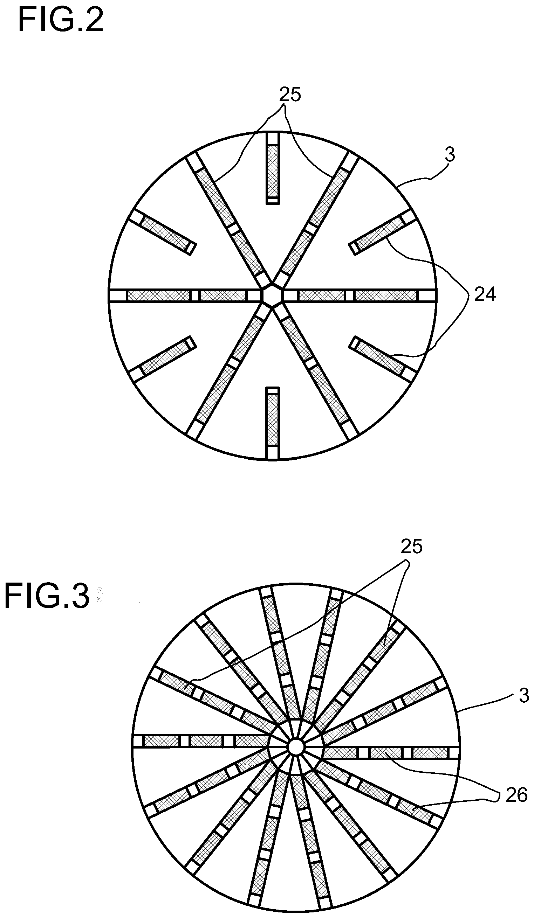

In Figur 2 ist eine Anordnung von radial verlaufenden Vertropferkanälen unterschiedlicher Länge dargestellt.

In einer ersten Ausführungsform weist die Vorrichtung zur Vertropfung radial verlaufende Kanäle 25 auf. Hierbei ragt ein Teil der Kanäle 25 bis in die Mitte des Reaktors 1. Ein weiterer Teil an Kanälen 24 ragt weniger weit in den Reaktor 1, so dass insbesondere in den äußeren Bereichen des Reaktors, wo der Abstand zwischen den radial verlaufenden bis in die Mitte des Reaktors 1 ragenden Kanälen 25 groß ist, weitere Kanäle 24 vorgesehen sind, durch die Monomerlösung in den Reaktor 1 eingebracht werden kann. Dies erlaubt eine gleichmäßigere Verteilung der Tropfen über den gesamten Reaktorquerschnitt.

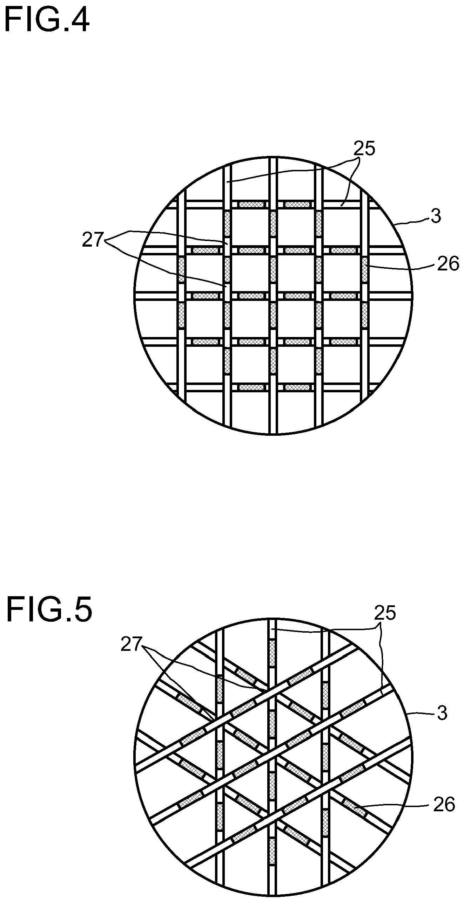

Eine entsprechende sternförmige Anordnung der Kanäle 25 ist in Figur 3 dargestellt. Weitere mögliche Anordnungen der Kanäle zeigen die Figuren 4 und 5. Bei diesen ist allerdings eine Anordnung mit einem Winkel β zur Horizontalen nur schwierig zu realisieren, so dass in diesem Fall die Kanäle 25 vorzugsweise horizontal verlaufen. Figur 4 zeigt eine Anordnung in Rechteckteilung, bei der die einzelnen Kanäle 25 jeweils in einem Winkel von 90° zueinander angeordnet sind, so dass durch die Schnittpunkte 27 der Kanäle jeweils Rechtecke, vorzugsweise Quadrate gebildet werden.

Figur 5 zeigt eine Anordnung in Dreiecksteilung. Hier sind die Kanäle 25 jeweils mit einem Winkel von 60° zueinander angeordnet, so dass durch die Schnittpunkte 27 der Kanäle 25 jeweils gleichseitige Dreiecke gebildet werden. Dies setzt allerdings zudem voraus, dass die jeweils parallel verlaufenden Kanäle einen immer gleich großen Abstand aufweisen.

Alternativ zu den hier dargestellten Ausführungsformen ist es selbstverständlich auch möglich, die Kanäle so anzuordnen, dass der Abstand zwischen parallel angeordneten Kanälen variiert oder der Abstand zwischen den parallel angeordneten Kanälen jeweils gleich groß ist, aber die Abstände zwischen den parallel angeordneten Kanälen, die in unterschiedlicher Richtung verlaufen, unterschiedlich sind. Zudem ist es auch möglich, die Kanäle in einem beliebigen anderen Winkel zueinander anzuordnen.

Insbesondere bei einem kreisförmigen Reaktorquerschnitt ist jedoch die in Figur 3 dargestellte sternförmige Anordnung bevorzugt. Hierbei kann jedoch die Anzahl der Kanäle in Abhängigkeit vom Umfang des Reaktors variieren. Zudem ist es möglich, die Kanäle unterschiedlich lang zu gestalten, so dass diese unterschiedlich weit in den Reaktor 1 hineinragen. Dabei ist jedoch immer eine drehsymmetrische Anordnung bevorzugt.

Die Position von Vertropferplatten 26, mit denen die Kanäle zur Zufuhr der Monomerlösung auf ihrer Unterseite abgeschlossen sind, und in denen die Löcher ausgebildet sind, durch die die Monomerlösung in den Reaktor vertropft wird, ist in den Figuren 3 bis 5 durch die gepunkteten Flächen dargestellt.

Erfindungsgemäß wird die Anzahl der Kanäle 24, 25 so gewählt, dass das Verhältnis der von den Kanälen 24, 25 oder dem Vertropferkopf abgedeckten Fläche im Reaktor bezogen auf die Fläche, die durch den Umfang einer Linie entlang der äußersten Löcher definiert wird, kleiner ist als 50%. Hierdurch wird sichergestellt, dass ausreichend Gas an den Kanälen 24, 25 vorbei strömen kann und ein hinreichender Kontakt zwischen Gas und die Kanäle 24, 25 verlassenden Tropfen realisiert wird.

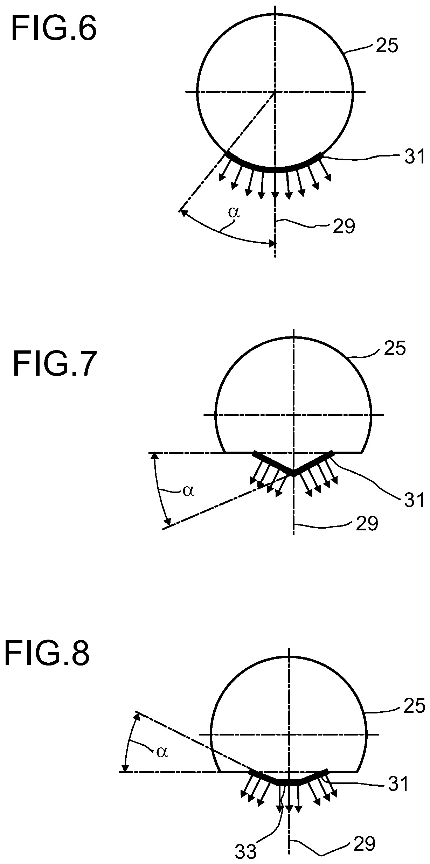

In den Figuren 6, 7 und 8 sind Querschnitte durch Kanäle 25 in unterschiedlichen Ausführungsformen dargestellt.

Um eine gleichmäßige Tropfenverteilung über den Reaktorquerschnitt zu erhalten, ist es bevorzugt, wenn zumindest die Tropfen, die an den äußeren Löcher in einem Kanal gebildet werden, in einem Winkel zur Senkrechten, das heißt zur Reaktorachse, austreten. Hierzu ist es zum Beispiel möglich, den Bereich des Kanals, in dem die Löcher ausgebildet sind, wie in Figur 6 dargestellt, in Form eines Kreissegments zu gestalten. Hierdurch nimmt der Winkel a, unter dem die Monomerlösung in Bezug auf die Reaktorachse 29 austritt, von der Kanalmitte nach außen hin zu.

Alternativ ist es auch möglich, wie in Figur 7 dargestellt, den Kanalboden, in dem die Löcher ausgebildet sind, in einem Winkel zur Horizontalen auszurichten, wobei bei Löchern senkrecht zum Kanalboden 31 der Winkel a, mit dem die Tropfen austreten zur Reaktorachse dem Winkel α des Kanalbodens zur Horizontalen entspricht. Auch ist eine Gestaltung möglich, bei der zusätzlich zu den gewinkelten Bereichen des Kanalbodens 31 ein mittlerer Bodenbereich 33 horizontal verläuft.

Um eine einfache Reinigung der Löcher zu ermöglichen, ist es vorteilhaft, wenn die Löcher in Vertropferplatten ausgebildet sind, die an entsprechend gestalteten Öffnungen im Boden der Kanäle 25 positioniert werden. Die Vertropferplatten können dann zur Reinigung ausgebaut werden und durch saubere Vertropferplatten ersetzt werden. Die Vertropferplatten sind dabei vorzugsweise entweder in Form eines Kreissegments oder gewinkelt gestaltet, damit ein Bodenverlauf des Kanals 25 realisiert werden kann, wie er in den Figuren 6 bis 8 dargestellt ist.

Insbesondere bei einer sternförmigen Anordnung der Kanäle ist es weiterhin bevorzugt, wenn der Winkel, mit dem die Monomerlösung austritt, von der Reaktormitte nach außen hin zunimmt.

Neben dem hier dargestellten kreisförmigen Querschnitt ist es auch möglich, die Kanäle 25 mit einem beliebigen anderen Querschnitt zu gestalten. Insbesondere dann, wenn Vertropferplatten eingesetzt werden, ist es besonders bevorzugt, die Kanäle 25 mit einem rechteckigen Querschnitt auszubilden. In diesem Fall kann der Kanal oben mit einem abnehmbaren Deckel verschlossen werden und die Vertropferplatten können nach Abnehmen des Deckels auf einfache Weise entnommen und ausgetauscht werden.

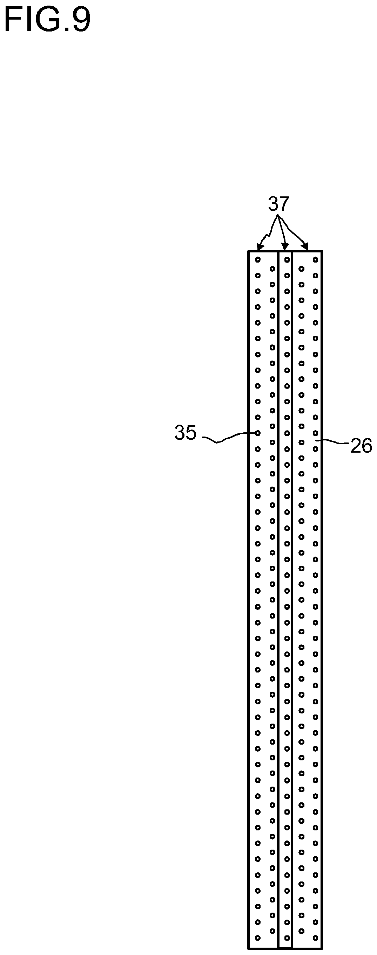

Figur 9 zeigt eine Draufsicht auf eine Vertropferplatte.

Eine Vertropferplatte 26 weist eine Anzahl an Löchern 35 auf, durch die die Monomerlösung in den Reaktor eingetropft wird. Dabei fließt die Monomerlösung durch die Löcher 35 und zerfällt nach Verlassen der Vertropferplatte 26 in Tropfen. Die Tropfenerzeugung erfolgt dabei unmittelbar nach dem Verlassen der Vertropferplatte 26.

Erfindungsgemäß wird die Anzahl der Löcher in der Vertropferplatte bezogen auf die Fläche der Vertropferplatte 26 so gewählt, dass die Anzahl der Löcher bezogen auf die Fläche, die durch den Umfang einer Linie entlang der äußersten Löcher 35 der Vertropferplatte 26 definiert wird, im Bereich von 1000 bis 15000 Löcher/m$^2$, bevorzugt im Bereich von 2000 bis 12000 Löcher/m$^2$ und insbesondere im Bereich von 4000 bis 10000 Löcher/m$^2$ liegt. Hierbei werden alle Vertropferplatten der Vorrichtung zur Vertropfung 5 im Reaktor 1 berücksichtigt. Durch die entsprechende Anzahl an Löchern 35 wird eine ausreichend große Menge an Tropfen erzeugt, um den Reaktor wirtschaftlich betreiben zu können, auf der anderen Seite darf die Anzahl an Tropfen nicht so groß werden, dass einzelne Tropfen zusammenstoßen und koaleszieren. Die Tropfenanzahl muss daher so gewählt werden, dass jeder Tropfen von einem ausreichend großen Gasvolumen umschlossen wird, mit dem ein Zusammenstoß mit anderen Tropfen weitgehend vermieden werden kann. Eine vollständige Vermeidung von Tropfenzusammenstößen und Koaleszenz einzelner Tropfen lässt sich nicht erreichen, wenn der Reaktor noch wirtschaftlich betrieben werden soll. Eine weitgehende Vermeidung wird jedoch erzielt, wenn die Anzahl an Löchern 35 in der Vertropferplatte bezogen auf die Fläche, die durch den Umfang einer Linie entlang der äußersten Löcher 35 der Vertropferplatte 26 definiert wird, im vorstehend beschriebenen Bereich liegt.

Aus herstellungstechnischer Sicht ist es bevorzugt, wenn die Löcher 35 zur Monomerzugabe in parallel nebeneinander liegenden Lochreihen 37, wie hier dargestellt, angeordnet sind. Um einen Zusammenprall der Tropfen weitgehend zu vermeiden, liegt ein geeigneter Abstand der Löcher in einer Lochreihe und der Lochreihen zueinander im Bereich von 1 bis 100 mm, bevorzugt im Bereich von 2 bis 50 mm und insbesondere im Bereich von 3 bis 20 mm.

Bezugszeichenliste

| | |
|---|---|
| 1 | Reaktor |
| 3 | Reaktorkopf |
| 5 | Vorrichtung zur Vertropfung |
| 7 | mittlerer Bereich |
| 9 | unterer Bereich |
| 11 | Wirbelschicht |
| 12 | Monomerzufuhr |
| 13 | Zugabestelle für Gas |
| 15 | Position der äußersten Löcher in Bezug zur Wirbelschicht 11 |
| 17 | Gasverteiler |
| 19 | Gasentnahmestelle |
| 21 | ringförmige Kammer |
| 23 | Produktentnahmestelle |
| 24 | Kanal |
| 25 | Kanal |
| 26 | Vertropferplatte |
| 27 | Schnittpunkt |
| 29 | Reaktorachse |
| 31 | Kanalboden |
| 33 | mittlerer Bodenbereich |
| 35 | Loch zur Monomerzugabe |
| 37 | Lochreihe |

**Patentansprüche**

1. Vorrichtung zum Einbringen von Tropfen aus einer Monomerlösung zur Herstellung von Poly(meth)acrylat in einen Reaktor (1) zur Tropfenpolymerisation, wobei mindestens ein Kanal (25) oder ein Vertropferkopf umfasst ist, wobei der Kanal (25) oder der Vertropferkopf an seiner Unterseite mit einer Vertropferplatte (26) verschlossen ist, wobei die Vertropferplatte (26) Löcher aufweist, durch die die Monomerlösung in den Reaktor (1) eingebracht wird, und wobei die Vertropferplatte (26) so gestaltet ist, dass Löcher (35) die bei einer achssymmetrischen Vertropferplatte (26) oder einer ringförmigen oder als Ringsegment gestalteten Vertropferplatte nicht auf einer Mittellinie der Vertropferplatte (26) oder bei einer kreisförmigen Vertropferplatte nicht am Mittelpunkt der Vertropferplatte (26) liegen, so ausgerichtet sind, dass Monomerlösung durch die Löcher (35) in einem Winkel zur Senkrechten im Bereich von 0 bis 30° in den Reaktor (1) eingebracht wird und wobei bei einer radialen Ausrichtung von achssymmetrischen Vertropferplatten (26) die Löcher (35) so ausgerichtet sind, dass der Winkel, mit dem die Monomerlösung in den Reaktor (1) eingebracht wird, in Richtung der Achse des Reaktors (1) abnimmt, und bei parallel zueinander angeordneten Vertropferplatten (26) oder konzentrisch angeordneten Vertropferplatten jeweils auf einer Linie parallel zur Mittellinie oder konzentrisch um den Mittelpunkt verlaufenden Linie so ausgerichtet sind, dass der Winkel, mit dem die Monomerlösung in den Reaktor (1) eingebracht wird, konstant ist und im Bereich von 0 bis 30° liegt.

2. Vorrichtung gemäß Anspruch 1, **dadurch gekennzeichnet, dass** mindestens zwei Verteileranordnungen mit jeweils mindestens zwei parallel zueinander angeordneten Vertropferplatten (26) in einem Winkel zueinander angeordnet sind, so dass sich eine Mehrecksteilung ergibt.

3. Vorrichtung gemäß Anspruch 1, **dadurch gekennzeichnet, dass** bei radialer Anordnung der Vertropferplatten (26) der abnehmende Winkel, mit dem die Monomerlösung in den Reaktor eingebracht wird, erhalten wird, indem ein Kanal von mindestens zwei Vertropferplatten (26) verschlossen ist und der Winkel, mit dem die Monomerlösung in den Reaktor (1) eingetropft wird für jede Lochreihe in einer Vertropferplatte (26) konstant ist, wobei die Winkel bei den näher zur Mitte des Reaktors (1) angeordneten Vertropferplatten (26) kleiner sind als die Winkel der Vertropferplatten (26), die weiter außen angeordnet sind.

4. Vorrichtung gemäß Anspruch 1 oder 3, **dadurch gekennzeichnet, dass** bei radialer Anordnung der Vertropferplatten (26) der Winkel, mit dem die Monomerlösung in den Reaktor (1) eingebracht wird, in einer Vertropferplatte (26) vom Mittelpunkt des Reaktors (1) nach außen zunimmt.

5. Vorrichtung gemäß Anspruch 4, **dadurch gekennzeichnet, dass** der Winkel a, mit dem die Monomerlösung zumindest aus den Löchern an den radialen Rändern austritt, im nachfolgend definierten Bereich liegt:

$$\frac{r}{N_{LR} \cdot d_P \cdot v^{0.578}} \cdot \left(0.00697 \cdot r + 0.0332\right) - 6.296 \le \alpha \le \frac{r}{N_{LR} \cdot d_P \cdot v^{0.578}} \cdot \left(0.00697 \cdot r + 0.0332\right) + 4.704,$$

für den Gültigkeitsbereich

$$0.25m \le r \le 10m$$

$$0.0001m \le d_P \le 0.0015m$$

$$3\tfrac{m}{s} \le v \le 30\tfrac{m}{s}$$

$$3 \le N_{LR} \le 18.$$

wobei r die radiale Position des Lochs in Metern, $N_{LR}$ die Anzahl der Kanäle, $d_p$ der mittlere Tropfendurchmesser in Metern und v die Tropfenaustrittsgeschwindigkeit in Meter pro Sekunde ist.

6. Vorrichtung gemäß einem der Ansprüche 1 bis 5, **dadurch gekennzeichnet, dass** bei einer achssymmetrisch oder als Ring oder Ringabschnitt gestalteten Vertropferplatte (26) Löcher entlang der parallel zur Achse des Kanals (25) verlaufenden Mittellinie oder bei einer kreisförmigen Vertropferplatte am Mittelpunkt so ausgerichtet sind, dass Monomerlösung, die durch diese Löcher eingebracht wird, senkrecht nach unten tropft.

7. Vorrichtung gemäß einem der Ansprüche 1 bis 6, **dadurch gekennzeichnet, dass** die Vertropferplatten (26) ein entlang ihrer Mittellinie gewinkeltes Profil, ein symmetrisch zur Mittellinie mehrfach gewinkeltes Profil oder ein Profil in Form eines Kreissegments aufweisen.

8. Vorrichtung gemäß einem der Ansprüche 1 bis 7, **dadurch gekennzeichnet, dass** bei einer radialen, parallelen oder ringförmigen Anordnung der Vertropferplatten (26) mehrere Kanäle (25) umfasst sind, die jeweils eine oder mehrere Vertropferplatten (26) aufweisen.

9. Vorrichtung gemäß einem der Ansprüche 1 bis 8, **dadurch gekennzeichnet, dass** der Abstand der äußersten Löcher (35) einer Vertropferplatte (26) zum Rand der Vertropferplatte (26) maximal 200 mm ist.

10. Vorrichtung gemäß einem der Ansprüche 1 bis 9, **dadurch gekennzeichnet, dass** die Löcher einen Durchmesser im Bereich von 25 bis 500 μm aufweisen.

11. Vorrichtung gemäß einem der Ansprüche 1 bis 10, **dadurch gekennzeichnet, dass** die Löcher einen Abstand voneinander im Bereich von 1 bis 100 mm aufweisen.

## Claims

1. An apparatus for introducing droplets of a monomer solution for production of poly(meth)acrylate into a reactor (1) for droplet polymerization, comprising at least one channel (25) or a dropletizer head, the channel (25) or the dropletizer head being sealed at its base by a dropletizer plate (26), the dropletizer plate (26) having holes through which the monomer solution is introduced into the reactor (1), and the dropletizer plate (26) being configured such that holes (35) that, in an axially symmetric dropletizer plate (26) or in an annular dropletizer plate or in one configured as a ring segment, are not on a center line of the dropletizer plate (26) or, in the case of a circular dropletizer plate, are not at the center of the dropletizer plate (26) are aligned such that monomer solution is introduced through the holes (35) into the reactor (1) at an angle to the vertical in the range from 0 to 30°, and the holes (35) in the case of a radial alignment of axially symmetric dropletizer plates (26) being aligned such that the angle at which the monomer solution is introduced into the reactor (1) decreases in the direction of the axis of the reactor (1) and, in the case of dropletizer plates (26) arranged parallel to one another or of concentrically arranged dropletizer plates, each being aligned on a line parallel to the center line or line running concentrically about the center, such that the angle at which the monomer solution is introduced into the reactor (1) is constant and is in the range from 0 to 30°.

2. The apparatus according to claim 1, wherein at least two distributor arrangements each having at least two dropletizer plates (26) arranged in parallel to one another are arranged at an angle relative to one another so as to result in a multiangular pitch.

3. The apparatus according to claim 1, wherein the decreasing angle at which the monomer solution is introduced into the reactor in the case of radial arrangement of the dropletizer plates (26) is obtained by virtue of a channel being sealed by at least two dropletizer plates (26) and the angle at which the monomer solution is dropletized into the reactor (1) being constant for each row of holes in a dropletizer plate (26), the angles being less in the dropletizer plates (26) disposed closer to the middle of the reactor (1) than the angles of the dropletizer plates (26) disposed further to the outside.

4. The apparatus according to claim 1 or 3, wherein the angle at which the monomer solution is introduced into the reactor (1) in the case of a radial arrangement of the dropletizer plates (26) increases from the center of the reactor (1) outward in a dropletizer plate (26).

5. The apparatus according to claim 4, wherein the angle $\alpha$ at which the monomer solution exits at least from the holes at the radial edges is within the range defined below:

$$\frac{r}{N_{LR} \cdot d_P \cdot v^{0.578}} \cdot \left(0.00697 \cdot r + 0.0332\right) - 6.296 \leq \alpha \leq \frac{r}{N_{LR} \cdot d_P \cdot v^{0.578}} \cdot \left(0.00697 \cdot r + 0.0332\right) + 4.704,$$

for the range of validity

$$0.25m \leq r \leq 10m$$

$$0.0001m \leq d_P \leq 0.0015m$$

$$3\,\tfrac{m}{s} \leq v \leq 30\,\tfrac{m}{s}$$

$$3 \leq N_{LR} \leq 18.$$

where r is the radial position of the hole in meters, $N_{LR}$ is the number of channels, $d_p$ is the mean droplet diameter in meters and v is the droplet exit velocity in meters per second.

6. The apparatus according to any of claims 1 to 5, wherein holes along the center line running parallel to the axis of the channel (25) in a dropletizer plate (26) configured in an axially symmetric manner or as a ring or ring section, or at the center in a circular dropletizer plate, are aligned such that the monomer solution which is introduced through these holes drips vertically downward.

7. The apparatus according to any of claims 1 to 6, wherein the dropletizer plates (26) have a profile angled along the central line thereof, a profile multiply angled symmetrically to the central line, or a profile in the form of a circle segment.

8. The apparatus according to any of claims 1 to 7, wherein a plurality of channels (25) each having one or more dropletizer plates (26) are included in a radial, parallel or angular arrangement of the dropletizer plates (26).

9. The apparatus according to any of claims 1 to 8, wherein the distance from the outermost holes (35) of a dropletizer plate (26) to the edge of the dropletizer plate (26) is not more than 200 mm.

10. The apparatus according to any of claims 1 to 9, wherein the holes have a diameter in the range from 25 to 500 $\mu$m.

11. The apparatus according to any of claims 1 to 10, wherein the holes have a distance from one another in the range from 1 to 100 mm.


**Revendications**

1. Dispositif pour l'introduction de gouttes d'une solution de monomères pour la fabrication de poly(méth)acrylate dans un réacteur (1) pour la polymérisation en gouttes, qui comprend au moins un canal (25) ou une tête de formation de gouttes, le canal (25) ou la tête de formation de gouttes étant fermé sur son côté inférieur avec une plaque de formation de gouttes (26), la plaque de formation de gouttes (26) comprenant des trous par lesquels la solution de monomères est introduite dans le réacteur (1) et la plaque de formation de gouttes (26) étant configurée de telle sorte que des trous (35) qui, dans une plaque de formation de gouttes (26) à symétrie axiale ou dans une plaque de formation de gouttes annulaire ou configurée sous la forme d'un segment d'anneau, ne se situent pas sur une ligne centrale de la plaque de formation de gouttes (26) ou qui, dans une plaque de formation de gouttes circulaire, ne se situent pas au centre de la plaque de formation de gouttes (26) sont orientés de telle sorte que la solution de monomères est introduite par les trous (35) dans le réacteur (1) à un angle par rapport à la verticale dans la plage allant de 0 à 30° et, en cas d'orientation radiale de plaques de formation de gouttes (26) à symétrie axiale, les trous (35) sont orientés de telle sorte que l'angle avec lequel la solution de monomères est introduite dans le réacteur (1) diminue dans la direction de l'axe du réacteur (1), et en cas de plaques de formation de gouttes (26) agencées en parallèle les unes par rapport aux autres ou de plaques de formation de gouttes agencées concentriquement, sont orientés respectivement sur une ligne parallèle à la ligne centrale ou sur une ligne agencée concentriquement autour du centre de telle sorte que l'angle avec lequel la solution de monomères est introduite dans le réacteur (1) soit constant et se situe dans la plage allant de 0 à 30°.

2. Dispositif selon la revendication 1, **caractérisé en ce qu'**au moins deux agencements de distribution comprenant chacun au moins deux plaques de formation de gouttes (26) agencées en parallèle les unes par rapport aux autres sont agencés l'un par rapport à l'autre à un angle, de telle sorte qu'une division polygonale soit obtenue.

3. Dispositif selon la revendication 1, **caractérisé en ce qu'**en cas d'agencement radial des plaques de formation de gouttes (26), l'angle décroissant avec lequel la solution de monomères est introduite dans le réacteur est obtenu par fermeture d'un canal d'au moins deux plaques de formation de gouttes (26) et l'angle avec lequel la solution de monomères est introduite goutte-à-goutte dans le réacteur (1) est constant pour chaque série de trous dans une plaque de formation de gouttes (26), les angles dans les plaques de formation de gouttes (26) plus proches du centre du réacteur (1) étant plus petits que les angles des plaques de formation de gouttes (26) qui sont agencées plus à l'extérieur.

4. Dispositif selon la revendication 1 ou 3, **caractérisé en ce qu'**en cas d'agencement radial des plaques de formation de gouttes (26), l'angle avec lequel la solution de monomères est introduite dans le réacteur (1) augmente vers l'extérieur dans une plaque de formation de gouttes (26) depuis le centre du réacteur (1) .

5. Dispositif selon la revendication 4, **caractérisé en ce que** l'angle $\alpha$ avec lequel la solution de monomères sort au moins des trous sur les bords radiaux se situe dans la plage définie ci-après :

$$\frac{r}{N_{LR} \cdot d_p \cdot v^{0,578}} \cdot (0,00697 \cdot r + 0,0332) - 6,296 \leq \alpha \leq \frac{r}{N_{LR} \cdot d_p \cdot v^{0,578}} \cdot (0,00697 \cdot r + 0,0332) - 4,704$$

pour la plage de validité

$$0,25m \leq r \leq 10m$$

$$0,0001m \leq d_p \leq 0,0015m$$

$$3\frac{m}{s} \leq v \leq 30\frac{m}{s}$$

$$3 \leq N_{LR} \leq 18$$

r étant la position radiale du trou en mètres, $N_{LR}$ étant le nombre de canaux, $d_p$ étant le diamètre de goutte moyen en mètres et v étant la vitesse de sortie de goutte en mètre par seconde.

6. Dispositif selon l'une quelconque des revendications 1 à 5, **caractérisé en ce qu'**en cas de plaque de formation de gouttes (26) configurée à symétrie axiale ou sous la forme d'un anneau ou d'une section d'anneau, des trous le long de la ligne centrale parallèle à l'axe du canal (25) ou, en cas de plaque de formation de gouttes circulaire, au centre sont orientés de telle sorte que la solution de monomères qui est introduite par ces trous s'égoutte verticalement vers le bas.

7. Dispositif selon l'une quelconque des revendications 1 à 6, **caractérisé en ce que** les plaques de formation de gouttes (26) présentent un profil à angle le long de leur ligne centrale, un profil à plusieurs angles symétriquement à la ligne centrale ou un profil sous la forme d'un segment de cercle.

8. Dispositif selon l'une quelconque des revendications 1 à 7, **caractérisé en ce qu'**en cas d'agencement radial, parallèle ou annulaire des plaques de formation de gouttes (26), plusieurs canaux (25) sont compris, qui comprennent chacun une ou plusieurs plaques de formation de gouttes (26).

9. Dispositif selon l'une quelconque des revendications 1 à 8, **caractérisé en ce que** l'écart entre les trous les plus extérieurs (35) d'une plaque de formation de gouttes (26) et le bord de la plaque de formation de gouttes (26) est d'au plus 200 mm.

10. Dispositif selon l'une quelconque des revendications 1 à 9, **caractérisé en ce que** les trous présentent un diamètre dans la plage allant de 25 à 500 $\mu$m.

**11.** Dispositif selon l'une quelconque des revendications 1 à 10, **caractérisé en ce que** les trous présentent un écart les uns des autres dans la plage allant de 1 à 100 mm.

## FIG.1

FIG.2

FIG.3

# FIG.4

# FIG.5

FIG.6

FIG.7

FIG.8

# FIG.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006079631 A
- WO 2008086976 A
- WO 2007031441 A
- WO 2008040715 A
- WO 2010003855 A
- WO 2011026876 A